# EUROPÄISCHE PATENTSCHRIFT

(11) **EP 0 805 303 B1**
(45) Veröffentlichungstag und Bekanntmachung des Hinweises auf die Patenterteilung: **10.01.2007**
(21) Anmeldenummer: 97106851.5
(22) Anmeldetag: 25.04.1997
(51) Int. Cl.: F17C 9/02, F17C 13/10

(54) **Verfahren und Verdampfer zum Verdampfen eines tiefkalten flüssigen Mediums**
Method and device for evaporating liquified gas at low temperature
Procédé et dispositif d'évaporation de gaz liquifiés à basses temrpératures

(30) Priorität: 03.05.1996 DE 19617916
(43) Veröffentlichungstag der Anmeldung: 05.11.1997
(73) Patentinhaber: Airbus Deutschland GmbH, 21129 Hamburg (DE)
(72) Erfinder: Suttrop, Friedemann, Prof.-Dr.-Ing., 52072 Aachen (DE)
(74) Vertreter: Beyer, Andreas

(56) Entgegenhaltungen:
- DE-A- 3 739 689
- DE-B- 1 118 539
- GB-A- 965 042
- GB-A- 2 240 813
- US-A- 3 354 652
- US-A- 5 012 640

## Beschreibung

Die Erfindung betrifft ein Verfahren gemäß dem Oberbegriff des Patentanspruchs 1 und einen Verdampfer gemäß dem Oberbegriff des Patentanspruchs 4.

Derartige Verdampfer sind in der Regel als Platten- oder Röhrenwärrnetauscher ausgebildet und werden in Fällen angewendet, in denen ein Medium tiefkalt in flüssiger Form in Tanks gelagert wird, aber in gasförmigem Aggregatzustand bereitgestellt werden muss. Ein Beispiel für einen solchen Fall ist die Verwendung von kryogenen Flüssigkeiten wie flüssigem Wasserstoff oder flüssigem Erdgas als Energieträger für Flugzeug-Triebwerke, insbesondere Turbo-Triebwerke.

Eine Besonderheit solcher Verdampfer besteht in der sehr niedrigen Eintrittstemperatur des zu verdampfenden Mediums in Höhe von nur 20 K (=-253 DEG C). Da als Wärmequelle für die Verdampfung (und gegebenenfalls Überhitzung) der kryogenen Flüssigkeit dem Verdampfer entweder Umgebungsluft oder zum Beispiel das Abgas eines Triebwerks oder ein anderes aufgeheiztes Medium zugeführt wird, kommt dieses Medium in Kontakt mit extrem kalten Oberflächen und gerät in die Gefahr, unter seine jeweilige Tautemperatur bzw. seinen Gefrierpunkt abgekühlt zu werden und teilweise an der Verdampferoberfläche auszukondensieren oder Eis zu bilden.

Man begegnet dieser Gefahr gewöhnlich durch eine Verschlechterung des Wärmedurchgangs, wodurch man höhere Oberflächentemperaturen an der Wärmeeintrittsseite des Verdampfers erreicht. Dies wiederum bedingt große und schwere Bauformen eines solchen Verdampfers, was speziell bei Anwendungen der Luft- und Raumfahrt unerwünscht ist.

Die US 5,012,640 beschreibt ein wasserstoffbetriebenes Raketentriebwerk, bei dem gasförmiger Wasserstoff in einem sich wendelförmig um eine Düse des Triebwerks erstreckenden Wärmetauscherrohr durch Wärmeabsorption von durch die Düse geleiteten Abgasen verdampft wird.

Die US 3,354,652, welche als nächstliegender Stand der Technik angesehen ist, beschreibt ein Raketentriebwerk, das eine von einem Brennstoff sowie einem Oxidationsmittel durchströmbare Brennkammer umfasst. Die Brennkammer ist von einem durch eine Mehrzahl von konzentrisch zueinander angeordneten Zylindern gebildeten Kühlmantel umgeben, wobei die Zylinder einen inneren Kühlkanal sowie einen äußeren Kühlkanal bilden. Zur regenerativen Kühlung der Brennkammer wird der Brennstoff von einem Brennstoffkanal in den inneren Kühlkanal geleitet. Nach dem Durchströmen des inneren Kühlkanals strömt der als Kühlmittel dienende Brennstoff in Gegenrichtung durch den äußeren Kühlkanal in Richtung einer Einspritzdüse. Über die Einspritzdüse wird der Brennstoff schließlich in die Brennkammer eingespritzt.

Demgemäss liegt der Erfindung die Aufgabe zugrunde, ein Verfahren zum Verdampfen von flüssigem Wasserstoff sowie einen Verdampfer anzugeben, die eine Kondensation bzw. Eisbildung des wärmespendenden Mediums (zum Beispiel Luft oder Abgas) sicher unterbinden und gleichzeitig eine leichte, kompakte Bauweise des Verdampfers ermöglichen.

Diese Aufgabe wird durch ein Verfahren mit den im Patentanspruch 1 angegebenen Merkmalen sowie einen Verdampfer mit den im Patentanspruch 4 angegebenen Merkmalen gelöst.

Vorteilhafte Weiterbildungen der Erfindung sind in den Unteransprüchen angegeben.

Die Erfindung ist anhand der Zeichnung dargestellt und nachfolgend näher erläutert. Es zeigen
- Fig. 1: einen Verdampfer im Längsschnitt,
- Fig. 2: eine Ausgestaltung des Verdampfers nach Fig. 1,
- Fig. 3: eine Ausgestaltung mit einer Rohrwendel, die nicht Gegenstand der Erfindung ist, und
- Fig. 4: eine Ausgestaltung mit einem Zusatzsteg, die nicht Gegenstand der Erfindung ist.

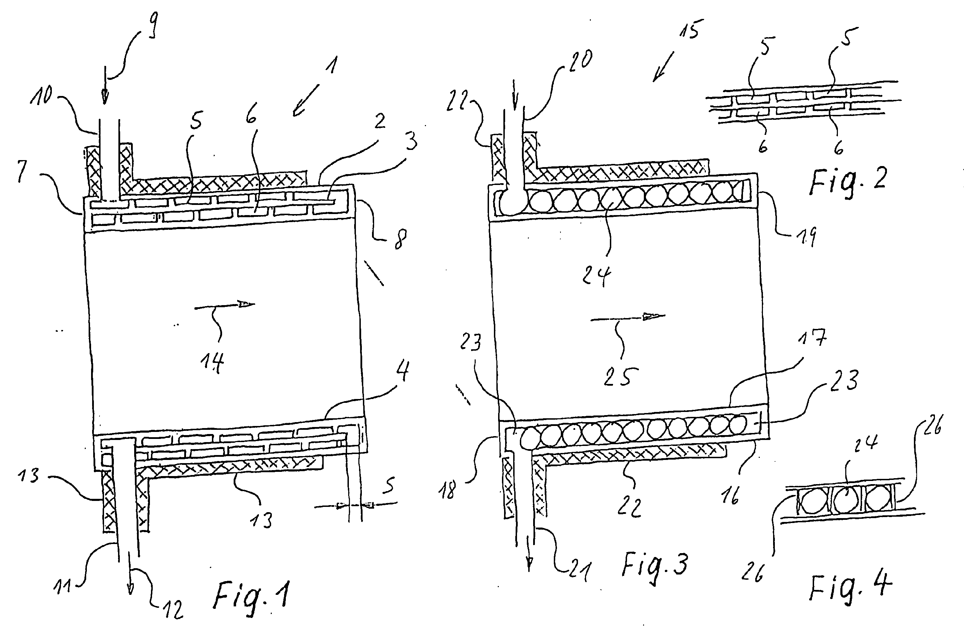

Figur 1 zeigt eine mögliche Ausbildung eines erfindungsgemäßen Verdampfers 1, beispielsweise zur Verdampfung von Wasserstoff für eine Flugzeugantriebsturbine. Dabei besteht der Verdampfer 1 im Prinzip aus drei ineinander gesteckten Rohren 2,3 und 4, wobei in die Außenflächen der beiden inneren Rohre 3 und 4 jeweils ein schraubenförmig umlaufender Kanal 5 bzw.6 eingearbeitet ist und die Wandungen der Kanäle jeweils mit den Innenflächen der darüber liegenden Rohre verbunden sind. Das äußere Rohr 2 und das innere Rohr 4 sind an ihren Enden jeweils durch eine Stirnwand 7 bzw. 8 gasdicht miteinander verbunden, wobei auch das mittlere Rohr 3 gasdicht mit der Stirnwand 7 verbunden ist. Zwischen dem im Bild rechten Ende des Rohres 3 und der Stirnwand 8 besteht ein Spalt s. Zur Einleitung eines zu verdampfenden Mediums in Richtung des Pfeiles 9 ist ein Eintritt 10 vorgesehen, der mit dem Kanal 5 in Verbindung steht. Zur Entnahme des gasförmigen Mediums dient ein mit dem Kanal 6 in Verbindung stehender Austritt 11, durch den das gewonnene Gas in Richtung des Pfeiles 12 austritt. Die während des Betriebes sehr kalten Außenflächen sind mit einer Isolierung 13 versehen, um Kondensation bzw. Eisbildung zu vermeiden. Im Betrieb strömt durch das innere Rohr 4 ein Wärme spendendes Medium in Richtung des Pfeiles 14. Wird nun ein zu verdampfendes Medium durch den Eintritt 10 in den Kanal 5 eingeleitet, so durchläuft es diesen im Bild von links nach rechts und gelangt durch den Spalt s in den Kanal 6, den es dann in Gegenrichtung bis zum Austritt 11 durchläuft. Damit durchläuft das zu verdampfende Medium zunächst eine vorlaufende Teillänge, gebildet durch den Kanal 5, und dann eine rücklaufende Teillänge, gebildet durch den Kanal 6. Im Prinzip ist gleichsinnige oder gegensinnige Ausbildung der Schraubenformen der Kanäle 5 und 6 möglich.

Figur 2 zeigt eine Ausgestaltung des Verdampfers nach Fig.1. Dabei sind die Wandungen der Kanäle 5 und 6 in radialer Richtung übereinander angeordnet. Hierdurch kann eine höhere Festigkeit des Verdampfers erzielt werden. Diese Ausgestaltung ist nur mit gleisinnigen Schraubenformen möglich.

Figur 3 zeigt eine andere Form eines Verdampfers 15, bestehend aus einem Außenmantel 16, einem Innenmantel 17, zwei Stirnwänden 18 und 19, einem Eintritt 20, einem Austritt 21 und einer Isolierung 22. Dabei schließen der Außenmantel 16 und der Innenmantel 17 sowie die Stirnwände 18 und 19 gasdicht einen Hohlraum 23 ein. Auch bei diesem Verdampfer 15 besteht der Weg, den das zu verdampfende Medium durchläuft, wieder aus einer vorlaufenden und einer rücklaufenden Teillänge. Hierzu ist eine Rohrwendel 24 so in den Hohlraum 23 eingesetzt, dass das die Wendel bildende Rohr gleichermaßen den Außenmantel 16 und den Innenmantel 17 berührt. Das im Bild linke Ende der Rohrwendel 24 steht nur mit dem Eintritt 20 in Verbindung, wohingegen das rechte Ende der Rohrwendel offen ist und in den Hohlraum 23 mündet. Wird das zu verdampfende Medium In den Eintritt 20 eingeleitet, so durchläuft es die Rohrwendel 24 im Bild von links nach rechts und gelangt am Ende der Rohrwendel 24 in den Hohlraum 23. Von hier strömt das Medium dann durch die zwischen der Wendel und dem Außenmantel 16 bzw. dem Innenmantel 17 bestehenden Kanäle von zwickelförmigem Querschnitt zurück und gelangt zum Austritt 21. Infolge der von einem in Richtung des Pfeiles 25 strömenden Medium abgegebenen Wärme tritt das verdampfte Medium am Austritt 21 in gasförmigem Zustand aus.

Figur 4 zeigt eine Ausgestaltung des Verdampfers mit einer Rohrwendel nach Figur 3. Außer der Rohrwendel 24 ist hier um den Innenmantel ein schraubenförmiger Blechsteg 26 gewickelt und mit diesem verschweißt. Dies dient bei hohen Innendrücken des Verdampfers der Versteifung des Innenmantels. Hierdurch wird ein Einbeulen des Innenmantels vermieden.

Das damit durchführbare Verfahren zum Verdampfen eines Mediums besteht darin, daß das Medium, beispielsweise Wasserstoff, zunächst in einer vorlaufenden Teillänge verdampft und bis zu einem gewissen Grade überhitzt und nach Durchlaufen dieser Teillänge entlang der Oberfläche zurückgeführt wird und als Zwischenschicht für den Wärmedurchgang dient. Dieses zurückgeführte und überhitzte Medium kann wegen seines niedrigen Taupunkts von 20 K nur kondensieren, wenn es auf diese Temperatur rückgekühlt wird, was durch geeignete Gestaltung des Verdampfers leicht vermieden werden kann.

Das aufgezeigte Verfahren einer Rückström- oder Umkehrverdampfung bzw. der entsprechende Verdampfer bietet Vorteile, wenn Medien von extrem unterschiedlichen Temperaturen zu behandeln sind, wobei zugleich äußerst niedrige Baugewichte einzuhalten sind.

Im praktischen Betrieb ist das innere Rohr 4 oder der Innenmantel 17 ein Bestandteil einer Heißgasleitung. Das genannte Verfahren kann aber ebenso erfolgreich angewendet werden, wenn das Wärme spendende Element beispielsweise eine Brennkammer ist, etwa gemäß der Patentanmeldung 195 47 515, die sich bereits auf eine Brennkammer mit einem intgrierten Verdamfer bezieht.

## Patentansprüche

1. Verfahren zum Verdampfen von flüssigem Wasserstoff mittels eines als Wärmetauscher wirkenden Verdampfers (1),
**dadurch gekennzeichnet, dass** der Wasserstoff zunächst in einer vorlaufenden Teillänge (5) verdampft und bis zu einem gewissen Grade überhitzt und nach Durchlaufen dieser Teillänge (5) entlang der Oberfläche zurückgeführt wird und als Zwischenschicht für den Wärmedurchgang dient.

2. Verfahren nach Anspruch 1,
**dadurch gekennzeichnet, dass** der Wasserstoff sowohl in der vorlaufenden als auch in der rücklaufenden Teillänge (5, 6) schraubenförmig geführt wird.

3. Verfahren nach Anspruch 1,
**dadurch gekennzeichnet, dass** der Wasserstoff mindestens in einer der Teillängen (5,6) schraubenförmig geführt wird.

4. Verdampfer (1) nach dem Prinzip eines Wärmetauschers mit einem Kanal (4) für ein Wärme spendendes Medium und einem Kanal (5, 6) für ein zu verdampfendes Medium, wobei der Kanal (5, 6) für das zu verdampfende Medium den Kanal (4) für das Wärme spendende Medium umgibt und aus einer dem Kanal (4) für das Wärme spendende Medium zugewandten Teillänge (6) und mindestens einer von dem Kanal (4) für das Wärme spendende Medium abgewandten Teillänge (5) besteht,
**dadurch gekennzeichnet, dass** die von dem Kanal (4) für das Wärme spendende Medium abgewandte Teillänge (5) des Kanals (5, 6) für das zu verdampfende Medium zur Bildung einer vorlaufenden Teillänge (5) mit einem Einlass (10) für das zu verdampfende Medium verbunden ist und die dem Kanal (4) für das Wärme spendende Medium zugewandte Teillänge (6) des Kanals (5, 6) für das zu verdampfende Medium zur Bildung einer rücklaufenden Teillänge (6) mit einem Auslass (11) für das zu verdampfende Medium verbunden ist.

5. Verdampfer nach Anspruch 4,
**dadurch gekennzeichnet, dass** die vorlaufende Teillänge (5) und/oder die rücklaufende Teillänge (6) aus einem schraubenförmig geführten Kanal gebildet ist.

6. Verdampfer nach Anspruch 5,
**dadurch gekennzeichnet, dass** der Drehsinn der schraubenförmigen Teillängen (5, 6) gleich ist.

7. Verdampfer nach Anspruch 5,
**dadurch gekennzeichnet, dass** der Drehsinn der schraubenförmigen Teillängen (5,6) unterschiedlich ist.

8. Verdampfer nach einem der Ansprüche 4 bis 7,
**dadurch gekennzeichnet, dass** die vorlaufende Teillänge (5) und/oder die rücklaufende Teillänge (6) aus gefrästen Elementen gebildet ist.

9. Verdampfer nach einem der Ansprüche 4 bis 8,
**dadurch gekennzeichnet, dass** die rücklaufende Teillänge (6) aus mehreren parallel geschalteten Kanälen besteht.

10. Verdampfer nach einem der Ansprüche 4 bis 9,
**dadurch gekennzeichnet, dass** der Kanal (4) für das Wärme spendende Medium eine Brennkammer ist.

## Claims

1. Method for evaporating liquid hydrogen by means of an evaporator (1) acting as heat exchanger,
**characterized in that** at first the hydrogen is evaporated in an advancing partial length (5) and overheated up to a certain degree, and, after having passed this partial length (5), is returned along the surface and serves as intermediate layer for the passage of heat.

2. Method according to claim 1,
**characterized in that** the hydrogen is guided helically both in the advancing and the returning partial length (5, 6).

3. Method according to claim 1,
**characterized in that** the hydrogen is guided helically at least in one of the partial lengths (5, 6).

4. Evaporator (1) according to the principle of a heat exchanger, comprising a channel (4) for a heat-providing medium and a channel (5, 6) for a medium to be evaporated, wherein the channel (5, 6) for the medium to be evaporated encloses the channel (4) for the heat-providing medium and is comprised of a partial length (6) facing the channel (4) for the heat-providing medium and at least one partial length (5) facing away from the channel (4) for the heat-providing medium,
**characterized in that** the partial length (5) of the channel (5, 6) for the medium to be evaporated, which faces away from the channel (4) for the heat-providing medium, is connected to an inlet (10) for the medium to be evaporated in order to form a advancing partial length (5), and the partial length (6) of the channel (5, 6) for the medium to be evaporated, which faces the channel (4) for the heat providing medium, is connected to an outlet (11) for the medium to be evaporated in order to form a returning partial length (6).

5. Evaporator according to claim 4,
**characterized in that** the advancing partial length (5) and/or the returning partial length (6) is/are formed by a helically guided channel.

6. Evaporator according to claim 5,
**characterized in that** the sense of rotation of the helical partial lengths (5, 6) is the same.

7. Evaporator according to claim 5,
**characterized in that** the sense of rotation of the helical partial lengths (5, 6) is different.

8. Evaporator according to one of claims 4 to 7,
**characterized in that** the advancing partial length (5) and/or the returning partial length (6) is/are formed by milled elements.

9. Evaporator according to one of claims 4 to 8,
**characterized in that** the returning partial length (6) consists of several parallelly connected channels.

10. Evaporator according to one of claims 4 to 9,
**characterized in that** the channel (4) for the heat-providing medium is a combustion chamber.

## Revendications

1. Procédé pour évaporer de l'hydrogène liquide au moyen d'un évaporateur (1) fonctionnant comme un échangeur de chaleur, **caractérisé en ce que** l'hydrogène est d'abord évaporé et surchauffé jusqu'à un degré déterminé dans une longueur partielle d'aller (5) et, après le parcours de cette longueur partielle (5), est ramené le long de la surface et sert de couche intermédiaire pour le transfert de chaleur.

2. Procédé selon la revendication 1, **caractérisé en ce que** l'hydrogène est mené en forme d'hélice aussi bien dans la longueur partielle d'aller que dans la longueur partielle de retour (5, 6).

3. Procédé selon la revendication 1, **caractérisé en ce que** l'hydrogène est mené en forme d'hélice au moins dans l'une des longueurs partielles (5, 6).

4. Evaporateur (1) selon le principe d'un échangeur de chaleur avec un canal (4) pour un milieu dégageant de la chaleur et un canal (5, 6) pour un milieu à évaporer, où le canal (5, 6) pour le milieu à évaporer entoure le canal (4) pour le milieu dégageant de la chaleur et consiste en une longueur partielle (6) tournée vers le canal (4) pour le milieu dégageant de la chaleur et en au moins une longueur partielle (5) opposée au canal (4) pour le milieu dégageant de la chaleur, **caractérisé en ce que** la longueur partielle (5) du canal (5, 6) pour le milieu à évaporer qui est opposée au canal (4) pour le milieu dégageant de la chaleur est reliée à une entrée (10) pour le milieu à évaporer pour la formation d'une longueur partielle d'aller (5) et la longueur partielle (6) du canal (5, 6) pour le milieu à évaporer qui est tournée vers le canal (4) pour le milieu dégageant de la chaleur est reliée à une sortie (11) pour le milieu à évaporer pour la formation d'une longueur partielle de retour (6).

5. Evaporateur selon la revendication 4, **caractérisé en ce que** la longueur partielle d'aller (5) et/ou la longueur partielle de retour (6) est formée par un canal mené en forme d'hélice.

6. Evaporateur selon la revendication 5, **caractérisé en ce que** le sens de rotation des longueurs partielles en forme d'hélice (5, 6) est le même.

7. Evaporateur selon la revendication 5, **caractérisé en ce que** le sens de rotation des longueurs partielles en forme d'hélice (5, 6) est différent.

8. Evaporateur selon l'une des revendications 4 à 7, **caractérisé en ce que** la longueur partielle d'aller (5) et/ou la longueur partielle de retour (6) est formée par des éléments fraisés.

9. Evaporateur selon l'une des revendications 4 à 8, **caractérisé en ce que** la longueur partielle de retour (6) consiste en plusieurs canaux branchés en parallèle.

10. Evaporateur selon l'une des revendications 4 à 9, **caractérisé en ce que** le canal (4) pour le milieu dégageant de la chaleur est une chambre de combustion.
